# EUROPEAN PATENT APPLICATION

(11) **EP 4 289 743 A1**
(43) Date of publication of application: **13.12.2023**
(21) Application number: 23177321.9
(22) Date of filing: 05.06.2023
(51) Int. Cl.: B64D 11/06, B60N 2/64

(54) **SEAT BACK**

(30) Priority: 07.06.2022 GB 202208344
(71) Applicant: Acro Aircraft Seating Limited, Crick, Northamptonshire NN6 7SL (GB)
(72) Inventor: DODMAN, Benjamin, Crick, NN6 7SL (GB); BALLANTYNE, Robert Buchanan, Crick, NN6 7SL (GB)
(74) Representative: Sweetinburgh, Mark Roger

(57) **Abstract**

Described is a seat back for an aircraft seat, the seat back comprising a first side wall, a second side wall and a support wall for supporting a passenger leaning against the seat back. The first side wall and the second side wall define a space therebetween. The first side wall and the second side wall each comprise a front edge and a rear edge. At least part of the support wall is positioned adjacent the front edge of the first side wall and the second side wall. The first side wall and the second side wall each comprise an aperture for receiving a bolt therethrough and the support wall comprises one or more shaped surfaces to allow (i) insertion of a bolt through the aperture in each of the side walls from a position which is between the first and second side walls and in front of the shaped surface, and (ii) adjustment of the or each bolt from the front of the seat back. Also described is a seat and row of seats comprising the seat back.

## Description

The present invention relates to seat backs for aircraft seats.

Various types of aircraft seat are known which generally comprise a seat base, a seat back and a frame. In order to satisfy airline requirements, it is beneficial to make aircraft seats lighter and to minimise the space that they occupy on an aircraft.

It is also beneficial to improve access to seat components in order to allow maintenance to be carried out quickly. For example, if it is necessary to replace a seat back, then the quicker this can be done the less down time there will be for the aircraft. The same problems exist in seat manufacture, where ease of fitting components together is often linked to speed of manufacture.

A particular problem with seat backs is providing tooling access to enable the seat back to be connected to the frame. It is also often the case that bolts and fittings are visible in the completed seat which is not only unsightly, but which also poses the risk of tamper by aircraft passengers.

It is, therefore, an object of the present invention to seek to alleviate the above identified problems.

### SUMMARY OF THE INVENTION

According to one aspect of the present invention, there is provided a seat back for an aircraft seat, the seat back comprising a first side wall, a second side wall and a support wall for supporting a passenger leaning against the seat back, wherein
(a) the first side wall and the second side wall define a space therebetween;
(b) the first side wall and the second side wall each comprise a front edge and a rear edge;
(c) at least part of the support wall is positioned adjacent the front edge of the first side wall and the second side wall;
(d) the first side wall and the second side wall each comprise an aperture for receiving a bolt therethrough;
(e) the support wall comprises one or more shaped surfaces to allow:
   (i) insertion of a bolt through the aperture in each of the side walls from a position which is between the first and second side walls and in front of the shaped surface, and
   (ii) adjustment of the or each bolt from the front of the seat back.

The provision of the one or more shaped surfaces greatly aids insertion of a bolt through each aperture in the side walls from the front of the seat back. The bolts can be inserted from inside the seat back which means, when a cover and/or foam layer is placed on the front of the support wall, the bolts are not visible to a passenger. This arrangement also means that the seat back can be serviced from the front, which greatly improves the ease and speed of maintenance and manufacture.

Preferably, the support wall is a curved support wall.

Preferably, the support wall is curved from a position at or near the front edge of each of the first side wall and the second side wall to a position between the first and second side walls, said position being rearward of the front edge of the first side wall and the second side wall.

Preferably, at least part of the support wall is co-planar with the rear edge of the first side wall and the second side wall.

Preferably, the support wall is curved from a position at or near the front edge of each of the first side wall and the second side wall to a position between the first and second side walls, said position being co-planar with the rear edge of the first side wall and the second side wall.

Preferably, the support wall comprises a convex rear surface.

Preferably, the support wall comprises a first shaped surface for insertion of a bolt through an aperture in the first side wall and a second shaped surface for insertion of a bolt through an aperture in the second side wall.

Preferably, the first shaped surface is positioned at or near a first lateral side of the support wall and the second shaped surface is positioned at or near a second lateral side of the support wall.

Alternatively, the support wall comprises a shaped surface which traverses between a position at or near a first lateral side of the support wall and a position at or near a second lateral side of the support wall.

Preferably, the or each shaped surface comprises a recess.

Preferably, the or each shaped surface comprises a recess formed in the front surface of the support wall.

Preferably, the or each shaped surface comprises a channel.

Preferably, the or each shaped surface comprises a channel formed in the front surface of the support wall.

Preferably, the or each shaped surface is a U-shaped channel.

Preferably, the or each shaped surface comprises a rear wall.

Preferably, the or each shaped surface comprises a rear wall, a top wall and a bottom wall.

Preferably, the or each shaped surface is shaped for accommodating a tool for adjusting the position of a bolt positioned in the aperture.

Preferably, the or each shaped surface comprises a flared channel.

Preferably, the width of the or each shaped surface is greatest adjacent one or both of the side walls.

Preferably, the width of the or each shaped surface tapers from a greatest width adjacent one or both of the side walls.

Preferably, the depth of the or each shaped surface is greatest adjacent one or both of the side walls.

Preferably, the depth of the or each shaped surface tapers from a greatest depth adjacent one or both of the side walls.

Preferably, the seat back comprises a seat back body and a seat back frame, wherein the seat back body comprises the support wall and the seat back frame comprises the first and second side walls.

Preferably, the first and second side walls are hollow.

Preferably, the seat back body comprises first and second seat back body side walls.

Preferably, each seat back body side wall comprise an inner body side wall and an outer body side wall.

As such, in one embodiment, the first seat back body side wall comprises an inner first body side wall and an outer first body side wall and the second seat back body side wall comprises an inner second body side wall and an outer second body side wall.

Preferably, the or each shaped surface comprises an opening, wherein the opening is in the front surface of the support wall and in one or both of the first and second body side walls.

Preferably, the or each shaped surface comprises an opening, wherein the opening is in the front surface of the support wall and in one or both of the inner first and second body side walls.

Preferably, the support wall comprises a first shaped surface for insertion of a bolt through an aperture in the first side wall and a second shaped surface for insertion of a bolt through an aperture in the second side wall, wherein (i) the first shaped surface comprises an opening, wherein the opening is in the front surface of the support wall and in the first body side wall, and (ii) the second shaped surface comprises an opening, wherein the opening is in the front surface of the support wall and in the second body side wall.

Preferably, the opening is in one or both of the inner first body side wall and inner second body side wall.

Preferably, a channel is formed between the inner first body side wall and the outer first body side wall.

Preferably, the first side wall is positioned between the inner first body side wall and the outer first body side wall, preferably within the channel formed between the inner first body side wall and the outer first body side wall.

Preferably, a channel is formed between the inner second body side wall and the outer second body side wall.

Preferably, the second side wall is positioned between the inner second body side wall and the outer second body side wall, preferably within the channel formed between the inner second body side wall and the outer second body side wall.

Preferably, the inner body side walls are positioned inward of the side walls.

Preferably, the outer body side walls are positioned outward of the side walls.

Preferably, a channel is formed between the inner first body side wall and the first side wall.

Preferably, a channel is formed between the inner second body side wall and the second side wall.

Preferably, a channel is formed between the inner body side walls and the side walls.

Preferably, the or each shaped surface is positioned in line with the apertures in the first and second side walls.

Preferably, the seat back frame is U-shaped comprising a top bar joining a pair of first and second legs, wherein the first and second legs comprise the first and second side walls.

Preferably, the seat back comprises a pair of bolts for connecting the seat back to a seat frame, for example of an aircraft seat.

As will be appreciated, the bolts can be inserted through the apertures in the side walls of the seat back from the front of the seat back allowing the seat back to be secured to the seat frame with ease.

According to another aspect of the present invention, there is provided a seat comprising a seat back as described herein.

Preferably, the seat comprises a seat base, a seat frame and a seat back as described herein.

Preferably, the seat is a vehicle seat.

Preferably, the seat is an aircraft seat.

According to a further aspect of the present invention, there is provided a row of seats comprising a plurality of seats as described herein.

It will be appreciated that reference to "one or more" includes reference to "a plurality".

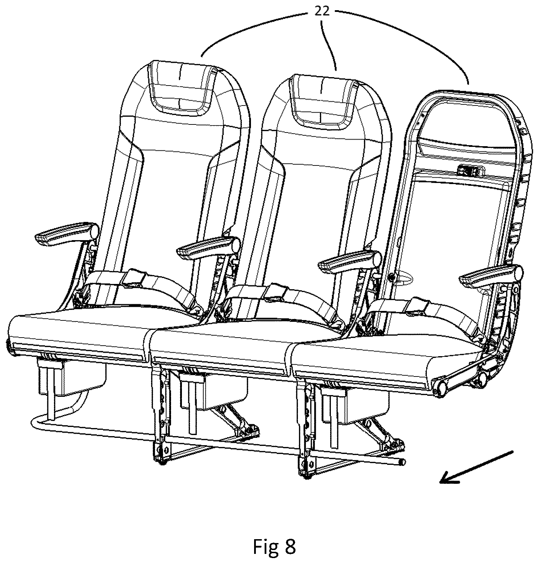

Within this specification, it will be appreciated that reference to front, rear, rearward and forward is with reference to the orientation of a passenger sitting in a seat as described herein with the passenger facing forward when sitting in the seat with their back against the seat back. As such, it will be appreciated that a forward direction is shown by the arrow in Figure 8.

Within this specification embodiments have been described in a way which enables a clear and concise specification to be written, but it is intended and will be appreciated that embodiments may be variously combined or separated without parting from the invention. For example, it will be appreciated that all preferred features described herein are applicable to all aspects of the invention described herein and vice versa.

### DETAILED DESCRIPTION

Example embodiments of the present invention will now be described with reference to the accompanying Figures, in which
Figure 1 shows a first perspective view of a seat back of the present invention;
Figure 2 shows a second perspective view of as seat back of the present invention;
Figure 3 shows an enlarged view of a shaped surface from behind the seat back of the present invention;
Figure 4 shows an enlarged view of a shaped surface from in front of the seat back of the present invention before insertion of a bolt through the aperture in the side wall;

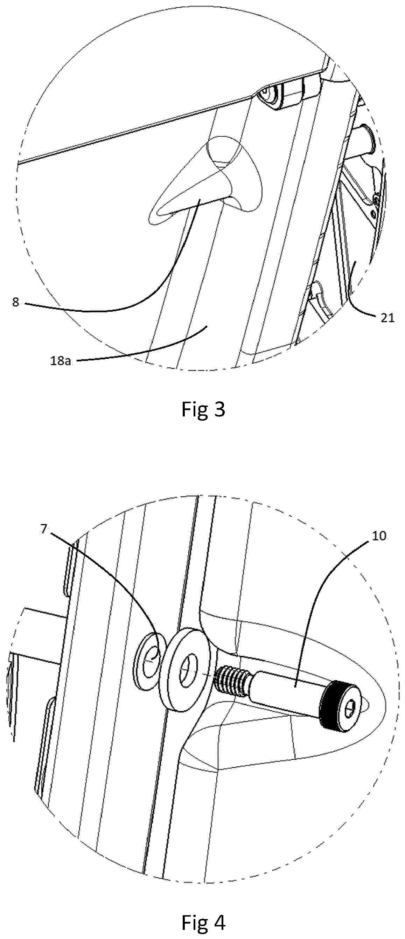

Figure 4 shows an enlarged view of a shaped surface from in front of the seat back of the present invention after insertion of a bolt through the aperture in the side wall;

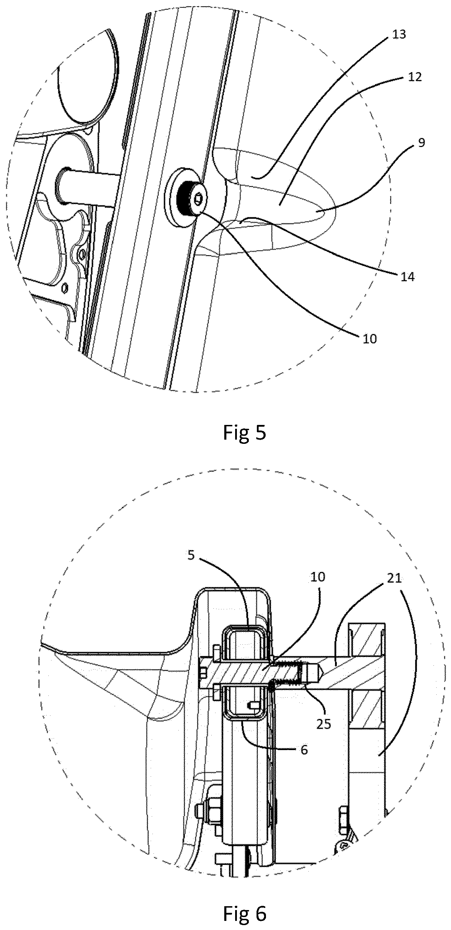

Figure 6 shows a cross-sectional view of part of a seat back and frame of the present invention;

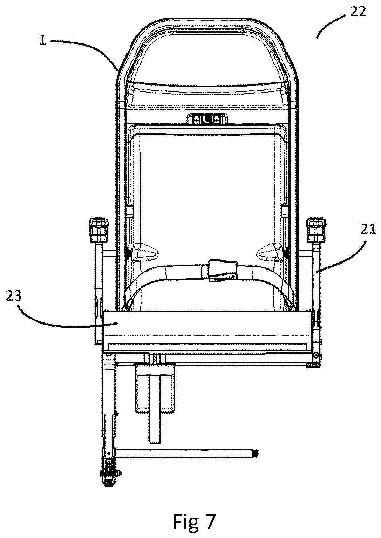

Figure 7 shows a front view of a seat of the present invention;
Figure 8 shows a row of seats of the present invention from the front; and

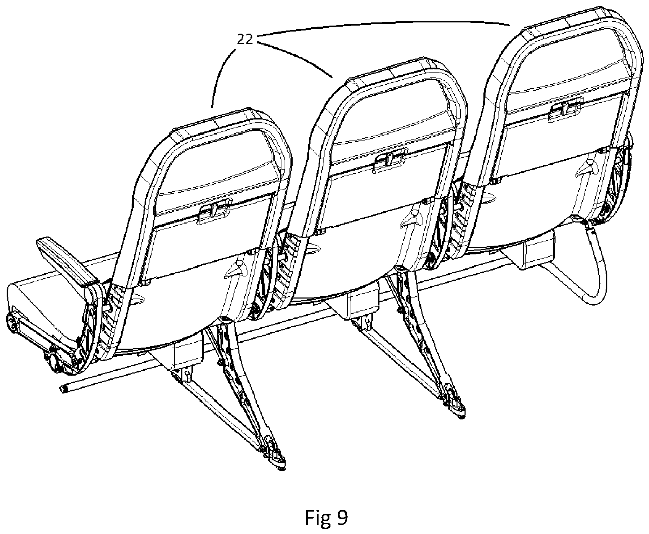

Figure 9 shows a row of seats of the present invention from the rear.

The present invention relates to a seat back 1 for an aircraft seat 22.

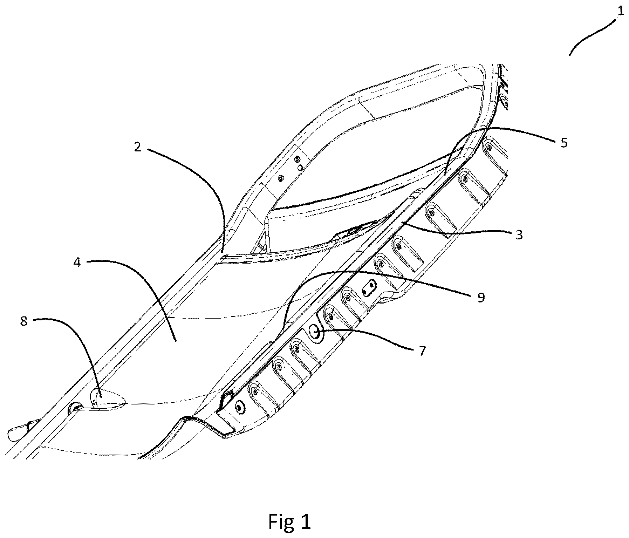

With reference to the Figures 1 to 6, there is shown a seat back 1 for an aircraft seat 22. An aircraft seat 22 which includes the seat back 1 is shown in Figure 7. A row of seats 22 which include the seat back is shown in Figures 8 and 9.

The seat back 1 includes a first side wall 2, a second side wall 3 and a support wall 4 for supporting a passenger leaning against the seat back 1 when seated. The first side wall 2 and the second side wall 3 each comprise a front edge 5 and an opposing rear edge 6 with the support wall 4 positioned adjacent the front edge 5 of the first side wall 2 and the front edge of the second side wall 3. Each of the first side wall 2 and the second side wall 3 comprise an aperture 7 for receiving a bolt 10 therethrough.

The support wall 4 includes a first shaped surface 8 and a second shaped surface 9. In the example shown, the shaped surfaces 8, 9 are each in the form of a flared channel, which each have a greatest diameter and depth adjacent the side walls 3, 4 and taper towards the centreline 24 of the support wall 4. The first and second shaped surfaces are recesses formed in the support wall 4.

The first shaped surface 8 is positioned at a first lateral side of the support wall 4 and the second shaped surface is positioned at a second lateral side of the support wall 4. Each of the shaped surfaces 8 have an identical size and shape.

The provision of the first and second shaped surfaces greatly aids insertion of a bolt through each aperture in the side walls from the front of the seat back. The bolts can be inserted from inside the seat back which means, when a cover and/or foam layer is placed on the front of the support wall 4, the bolts are not visible to a passenger. This arrangement also means that the seat back can be serviced from the front, which greatly improves the ease and speed of maintenance and manufacture.

Alternatively, the support wall may include a channel which traverses across the seat back from one side of the support wall to the other side of support wall with the channel having flared ends. In essence, such an embodiment would be similar to that described herein with the first and second flared channels connected by a central channel.

As will be evident from the Figures, the support wall 4 is curved from a position near the front edge 5 of each of the first side wall 2 and the second side wall 3 to a position between the first and second side walls - i.e. towards the centre line 24 of the support wall 4, said position being rearward of the front edge 5 of the first side wall and the second side wall and co-planar with the rear edge 6 of the side walls. That is the, the support wall 4 is a continuous curved surface having a centre line that is co-planar with the rear edge 6 of the side walls 2, 3.

The channels 8, 9 are formed in the front surface 11 of the support wall 4. Each channel comprises a rear wall 12, a top wall 13 and a bottom wall 14.

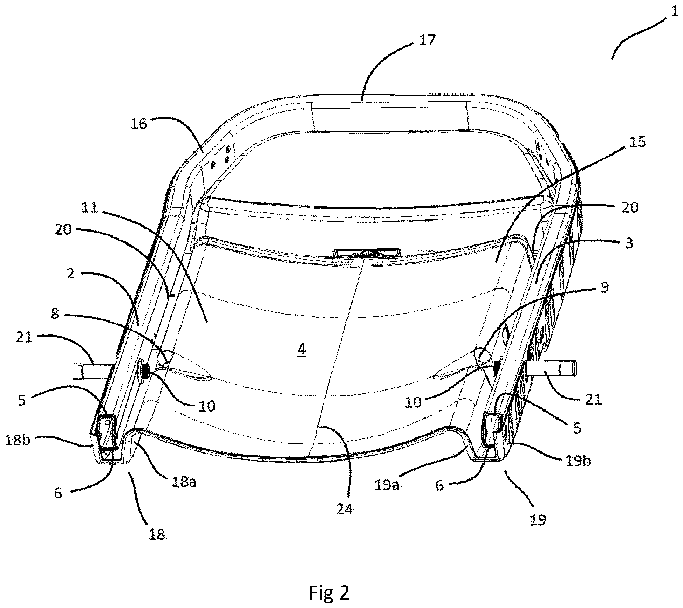

In the example shown, the seat back 1 is formed from a seat back body 15 and a seat back frame 16. The seat back body 15 includes the support wall 4. The seat back frame 16 is U-shaped comprising a top bar 17 joining a pair of first and second legs 2, 3 which form the first and second side walls 2, 3. As shown in Figure 2, the frame 16 is hollow.

The seat back body 15 comprises first 18 and second 19 seat back body side walls. The first 18 and second 19 seat back body side walls each comprise an inner body side wall 18a, 19a and an outer body side wall 18b, 19b. As in the example shown, the first seat back body side wall 18 comprises an inner first body side wall 18a and an outer first body side wall 18b and the second seat back body side wall 19 comprises an inner second body side wall 19a and an outer second body side wall 19b.

The first channel 8 has an opening which is in the front surface of the support wall 4 and in the inner first body side wall 18a, and the second channel 9 has an opening which is in the front surface of the support wall 4 and in the inner second body side wall 19a.

The inner and outer body side walls 18a, 18b, 19a, 19b accommodate the first and second side walls 2, 3 therebetween with a gap 20 formed between the inner body side walls 18a, 19a and the side walls 2, 3. The gap 20 is particularly advantageous because it provides a channel 20 for accommodating cabling or the like.

In order to secure the seat back 1 to a seat 22, a pair of bolts 10 are inserted, i.e. a bolt is inserted through each of the apertures 7 and into corresponding apertures 25 in the frame 21 of the seat 22.

Whilst not specifically shown in the Figures, the position of the seat back can be fixed in various ways. For example, the seat back 2 can be fixed in position via one or more additional bolts or via one or more energy absorbing devices which permit movement of the seat back when a predetermined force is applied thereto. Alternatively, or in addition, movement of the seat back 2 can be controlled by a recline mechanism.

A seat 22 incorporating the seat back 2 is shown in Figure 7. The seat also includes a frame 21 and a seat base 23.

It should be understood that various changes and modifications to the presently preferred embodiments described herein will be apparent to those skilled in the art. Such changes and modifications can be made without departing from the spirit and scope of the present invention and without diminishing its attendant advantages. It is therefore intended that such changes and modifications are covered by the appended claims.

## Claims

1. A seat back for an aircraft seat, the seat back comprising a first side wall, a second side wall and a support wall for supporting a passenger leaning against the seat back, wherein
(a) the first side wall and the second side wall define a space therebetween;
(b) the first side wall and the second side wall each comprise a front edge and a rear edge;
(c) at least part of the support wall is positioned adjacent the front edge of the first side wall and the second side wall;
(d) the first side wall and the second side wall each comprise an aperture for receiving a bolt therethrough;
(e) the support wall comprises one or more shaped surfaces to allow:
(i) insertion of a bolt through the aperture in each of the side walls from a position which is between the first and second side walls and in front of the shaped surface, and
(ii) adjustment of the or each bolt from the front of the seat back.

2. A seat back according to claim 1, wherein the support wall is a curved support wall, optionally wherein the support wall is curved from a position at or near the front edge of each of the first side wall and the second side wall to a position between the first and second side walls, said position being rearward of the front edge of the first side wall and the second side wall, and/or
wherein at least part of the support wall is co-planar with the rear edge of the first side wall and the second side wall.

3. A seat back according to claim 1 or 2, wherein the support wall comprises a first shaped surface for insertion of a bolt through an aperture in the first side wall and a second shaped surface for insertion of a bolt through an aperture in the second side wall.

4. A seat back according to claim 3, wherein the first shaped surface is positioned at or near a first lateral side of the support wall and the second shaped surface is positioned at or near a second lateral side of the support wall.

5. A seat back according to any preceding claim, wherein the or each shaped surface comprises a recess and/or a channel formed in the front surface of the support wall, and/or
wherein the or each shaped surface is a U-shaped channel.

6. A seat back according to any preceding claim, wherein the or each shaped surface is shaped for accommodating a tool for adjusting the position of a bolt positioned in the aperture.

7. A seat back according to any preceding claim, wherein the or each shaped surface comprises a flared channel, and/or
wherein the width and/or depth of the or each shaped surface is greatest adjacent one or both of the side walls, and/or
wherein the width and/or depth of the or each shaped surface tapers from a greatest width and/or depth adjacent one or both of the side walls.

8. A seat back according to any preceding claim, wherein the seat back comprises a seat back body and a seat back frame, wherein the seat back body comprises the support wall and the seat back frame comprises the first and second side walls, optionally wherein the seat back body comprises first and second seat back body side walls.

9. A seat back according to claim 8, wherein each seat back body side wall comprises an inner body side wall and an outer body side wall.

10. A seat back according to claim 8 or 9, wherein the or each shaped surface comprises an opening, wherein the opening is in the front surface of the support wall and in one or both of the first and second body side walls, and/or
wherein the or each shaped surface comprises an opening, wherein the opening is in the front surface of the support wall and in one or both of the inner first and second body side walls.

11. A seat back according to claim 9 or 10, wherein a channel is formed between (i) the inner first body side wall and the outer first body side wall, and/or (ii) between the inner second body side wall and the outer second body side wall, and/or
wherein (i) the first side wall is positioned between the inner first body side wall and the outer first body side wall, and/or (ii) the second side wall is positioned between the inner second body side wall and the outer second body side wall, and/or
wherein a channel is formed between the inner first body side wall and the first side wall and/or between the inner second body side wall and the second side wall.

12. A seat back according to any preceding claim, wherein the or each shaped surface is positioned in line with the apertures in the first and second side walls.

13. A seat comprising a seat back according to any preceding claim.

14. A seat according to claim 13, wherein the seat is a vehicle seat, preferably an aircraft seat.

15. A row of seats comprising a plurality of seats according to claim 13 or 14.
